# EUROPEAN PATENT APPLICATION

(11) **EP 0 933 407 A1**
(43) Date of publication of application: **04.08.1999**
(21) Application number: 99300283.1
(22) Date of filing: 15.01.1999
(51) Int. Cl.: C09D 11/02

(54) **Flexographic security ink with near infrared fluorophores**

(30) Priority: 30.06.1998 US 108133; 02.02.1998 US 73322 P
(71) Applicant: NCR INTERNATIONAL INC., Dayton, Ohio 45479 (US)
(72) Inventor: Tan, Yaoping, Miamisburg, Ohio 45342 (US); Lewis, Maurice W., Dayton, Ohio 45406 (US); Jergens, Bernard J., Centerville, Ohio 45459-2302 (US); Halbrook, Wendell B., Jr., Waynesville, Ohio 45068-9767 (US); Jeffers, David W., Jr., Centerville, Ohio 45458 (US)
(74) Representative: Cleary, Fidelma

(57) **Abstract**

Flexographic inks which contain colorants and near infrared fluorescent compounds provide printed documents with colored print, including black, and NIRF security. Printing systems of a combination of flexographic inks enable any color to be printed with NIRF security. Printing methods enable pigments with high infrared absorption to be used in inks where printed in screen format.

## Description

The present invention relates to security inks used to thwart counterfeiting of printed commercial documents such as sales transaction records and receipts. More particularly, the invention relates to the use of security features in flexographic printing inks and flexographic printing methods.

Many different means of security are available to prevent duplication of printed commercial documents such as special papers (water marked paper) and special inks (fluorescent inks and other optically variable inks) which form latent images or images that change color.

The use of latent images as a security measure is well known. To be useful as a security measure, latent images must be well camouflaged but readily and easily viewable to the user, preferably by a simple procedure. An example of such a latent image is described in U.S. Patent No. 5,468,581, which is formed when printing documents using an intaglio process. The latent image is overprinted on the visible image such that the latent image is visible when the document is tilted and viewed at an angle. The latent image is caused by the variation of the slight shadow from the raised ink pattern formed by the intaglio process or other printing method which produces raised ink patterns.

Optically variable inks have been used to provide latent images and images which change color when exposed to a light source other than ambient light. These optically variable inks allow for non-destructive testing of the security feature allowing the printing of such inks to be monitored. Such optically variable inks typically contain a fluorescent compound which responds to infrared or ultraviolet light. An example of an aqueous printing ink for jet printing which fluoresces under ultraviolet radiation is described in U.S. Patent No. 4,153,593. The dyes described in this reference are water soluble and include fluorescein, eosine dyes and Rhodamine dyes. Representative disclosures of other inks include U.S. Patent No. 4,328,332, issued to Hayes et al. on May 4, 1982, and U.S. Patent No. 4,150,997, issued to Hayes on April 24, 1979. While the use of fluorescent inks and dyes and photochromic compounds has been effective, with the advent of today's personal computers and color copiers, security measures relying on these optically variable inks have been overcome, particularly where records are only casually inspected, such as sales receipts and transaction records. Therefore, it is desirable to provide new security measures for commercial documents.

Krutak et al. describe the use of near infrared fluorescent (NIRF) compounds used in polyester-based and polyester-amide based coatings and ink compositions which are used for marking articles for identification/authentication purposes, in U.S. Patent No. 5,292,855, issued March 8, 1994, U.S. Patent No. 5,423,432, issued June 13, 1995, and U.S. Patent No. 5,336,714, issued August 9, 1994. Krutak et al. also disclose tagging thermoplastic containers and materials with near infrared fluorescent compounds in U.S. Patent Nos. 5,461,136, issued October 24, 1995, U.S. Patent No. 5,397,819, issued March 14, 1995, and U.S. Patent No. 5,703,229, issued December 30, 1997. The use of near infrared fluorescent compounds as a security ink in thermal transfer printing has also been disclosed in International application WO 97/32733, published September 12, 1997, wherein an image is formed by thermally transferring ink from a ribbon to paper. Escano et al., U.S. Patent Nos. 5,614,008 and 5,665,151, also disclose inks containing NIRF compounds.

Kaule et al., U.S. Patent Nos. 4,452,843 and 4,598,205, disclose rare earth metal luminophores which absorb in the visible region and optionally the near-infrared region and can be excited in substantial portions of the visible or near IR-region.

Yoshinaga et al., U.S. Patent No. 5,503,904, disclose recorded media with an invisible identification mark composed of regions of high reflectance and low reflectance in the same near infrared region.

Security inks with near infrared fluorescent compounds have primarily been transparent/invisible, and are typically applied by a printing step separate from the colored inks since many common colorants, such as carbon black, absorb near infrared radiation and interfere with the detection of fluorescence from the NIRF compounds. It is desirable to apply NIRF security to a base sheet of printed media without requiring a separate printing step.

Flexographic inks and printing systems are well known. Representative disclosures relating to flexographic inks and printing systems include Marozz et al., U.S. 5,558,020, which describes a flexographic printing system and apparatus. Schwartz, U.S. Patent No. 4,612,052, which describes a flexographic ink composition and Tajin et al., U.S. Patent No. 5,120,360, which describes a flexographic ink with a microcapsule security feature. Flexographic printing is well suited for aqueous based inks. It is desirable to apply NIRF security to documents by a flexographic printing process.

It is an object of the present invention to provide a colored flexographic ink which will form both a printed image and NIRF security feature to prevent counterfeiting. The present invention consists in a flexographic printing ink which provides colored print and a security feature and comprises a solvent, colorant, resinous binder, characterised in that it also comprises a near infrared fluorescent (NIRF) compound which fluoresces photons at wavelengths in the range of 650 nm to 2,500 nm, in that the amount of NIRF compound is sufficient to form flexographic print which can be sensed by a photon detector operating in the near infrared region of 650 nm to 2,500 nm and the amount of colorant is sufficient to provide colored print, detectable by the unaided human eye, and in that the colorant is selected from dyes and pigments which comprise less than 3 wt.% carbon black.

The flexographic ink can be formulated to provide black print or to generate any color image while providing an NIRF security feature.

It is an additional object of the present invention to provide a flexographic printing system which will generate any color image and a NIRF security feature without a separate step for depositing the NIRF security feature.

It is a further object of the present invention to provide a flexographic printing method which will provide NIRF security and generate colored images with inks containing colorants that absorb near-infrared radiation.

The system and method of the invention can be used for preparing printed NIRF security documents through the sole use of flexographic processes and equipment.

The colorant is preferably selected from dyes and pigments which do not absorb near infrared radiation at levels which interfere with sensing the NIRF compounds in the flexographic print and images by a photon detector. Preferably, the NIRF compound is shielded from ambient air so as not to react with the oxygen therein. The NIRF compounds provide a unique mode of security through the unique wavelength of radiation to which the NIRF compounds respond.

According to another aspect of the present invention, there is provided a flexographic printing system which comprises 1) a cyan colored flexographic printing ink comprising solvent, cyan colorant and resin binder, 2) a magenta colored flexographic printing ink comprising solvent, magenta colorant and resin binder, 3) a yellow colored flexographic printing ink comprising solvent, yellow colorant and resin binder, and 4) a black colored flexographic printing ink comprising solvent, black dye and resin binder. One or more of these flexographic inks additionally contains a near infrared fluorescent (NIRF) compound which fluoresces photons at wavelengths in the range of 650 nm to 2500 nm in an amount sufficient to form flexographic print which can be sensed by a photon detector at wavelengths in the range of 650 to 2500 nm. The colorants for these inks are selected from dyes and pigments which comprise less that 3 wt.% carbon black and preferably do not absorb near infrared radiation at levels which interfere with sensing the NIRF compounds in the flexographic print by a photon detector.

The invention also provides a flexographic printing method wherein a base sheet is printed with colored images and a near infrared fluorescent (NIRF) security feature which comprises:
a) printing a colored image in screen format from 40% to 75% screen volume on a base sheet with a flexographic ink, preferably selected from cyan, magenta, yellow and black colored flexographic inks; and
b) applying to the base sheet a flexographic ink which contains a near infrared fluorescent (NIRF) pigment and optionally a colorant so as to be exposed between the unprinted regions of the colored image printed in screen format.

The NIRF pigment fluoresces photons at wavelengths in the range of 650 nm to 2500 nm on said print medium and is present in an amount sufficient to form flexographic printed coatings which can be sensed by a photon detector at wavelengths in the range of 650 nm to 2500 nm. The optional colorant is selected from dyes and pigments with less than 3 wt.% carbon black.

The flexographic inks of this invention can be applied to any conventional base sheer suitable for use in flexographic printing using conventional equipment. The flexographic ink can vary in composition, as is conventionally known in the art, including the incorporation of waxes and other optional components.

The NIRF compounds employed in the thermal recording media and methods of the present invention provide a security measure that is responsive to wavelengths in the near infrared region of 650 nm to 2500 nm. The NIRF compounds need not absorb or transmit visible light under ambient indoor conditions or when illuminated. Preferably, they are transparent or invisible to the naked human eye under ambient light.

Preferred NIRF compounds, used in the form of dyes or pigments, have excellent thermal stability and impart little or no color to the coatings and substrates to which they are applied. These compounds have strong absorption of near infra-red light (high molar extinction coefficients (e.g.,> 2000), and have strong fluorescence in the near infra-red over the wavelengths of about 670 nm to 2500 nm. They are preferably stable to sunlight and fluorescent light.

Suitable NIRF pigments and dyes include those described in U.S. Patent Nos. 5,292,855; 5,423,432; 5,336,714; 5,461,136; 5,397,819; 5,703,229; 5,614,088; 5,665,151 and 5,503,904.

Suitable NIRF compounds are selected from the classes of phthalocyanines, naphthalocyanines, squaraines and correspond to Formulae II, III and IV: 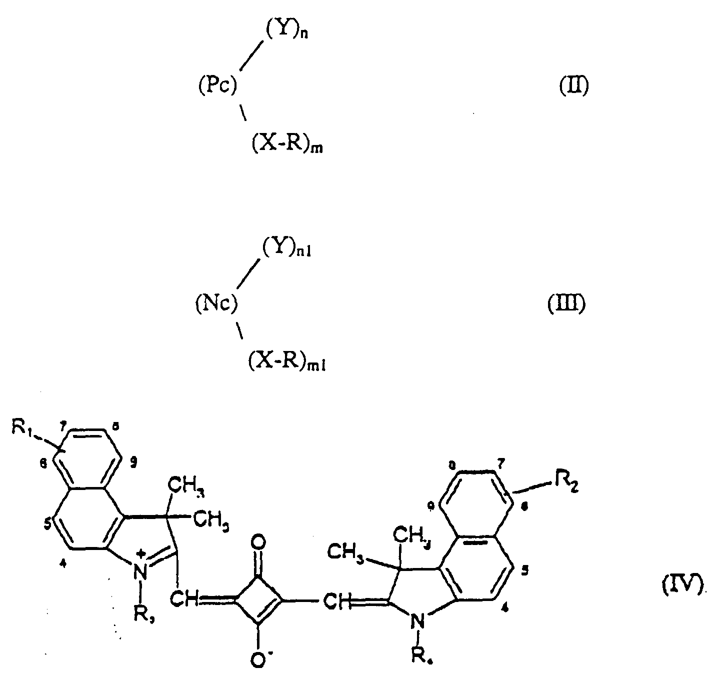
wherein Pc and Nc represent the phthalocyanine and 2,3-naphthalocyanine moieties of Formulae IIa and IIIa, 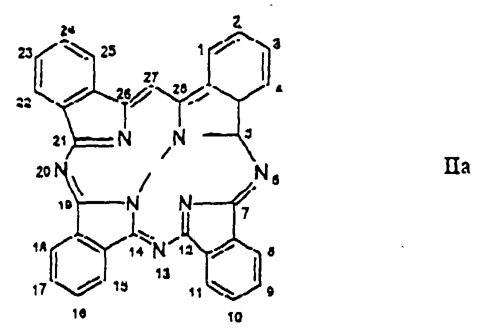 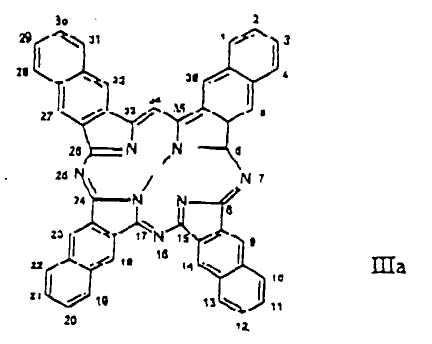 respectively, covalently bonded to various halometals, organometallic groups, and oxymetals, preferably aluminum and silicon based, including AlCl, AlBr, AlF, AlOR₅, AlSR₅, SiCl₂, SiF₂, Si(OR₆)₂, or Si(SR₆)₂,
R₅ and R₆ of the aluminum and silicon based groups are selected from hydrogen, alkyl, aryl, heteroaryl, lower alkanoyl, arylcarbonyl, arylaminocarbonyl, trifluoroacetyl, groups of the formulae 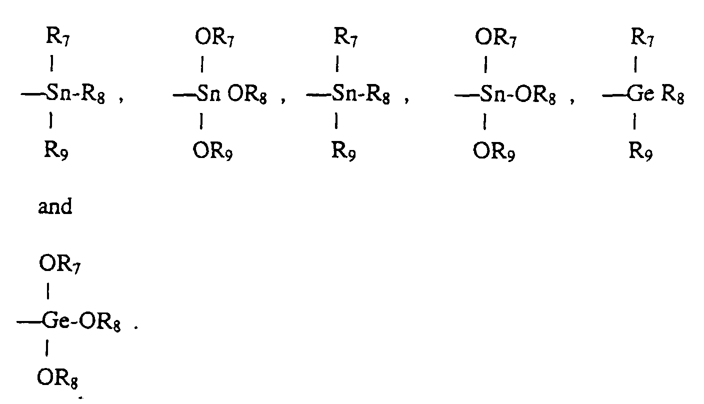
R₇, R₈ and R₉ of these Sn and Ge groups are independently selected from alkyl, phenyl or phenyl substituted with lower alkyl, lower alkoxy and halogen.
X of formulae II and III is selected from oxygen, sulfur, selenium, tellurium and a group of the formula N-R₁₀, wherein R₁₀ is hydrogen, cycloalkyl, alkyl, acyl, alkylsulfonyl, or aryl or R₁₀ and R taken together form an aliphatic or aromatic ring with the nitrogen atom to which they are attached.
Y of formulae II and III is selected from alkyl, aryl, heteroaryl, halogen or hydrogen.
R of formulae II and III is selected from hydrogen, unsubstituted or substituted alkyl, alkenyl, alkynyl,
C₃-C₈ cycloalkyl, aryl, heteroaryl, alkylene, 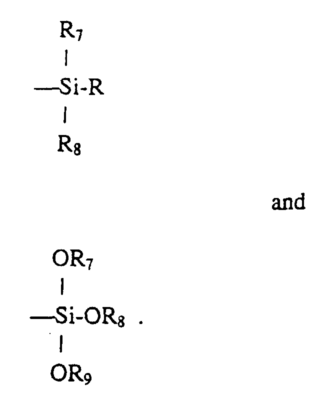
Alternatively, -(X-R)ₘ is one or more groups selected from alkylsulfonylamino; arylsulfonylamino; a group selected from the formulae -X(C₂H₄O)_{z}R, wherein R is as defined above and Z is an integer of from 1-4;

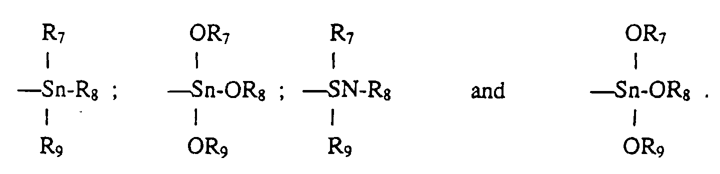

In addition, two -(X-R)ₘ groups can be taken together to form divalent substituents of the formula 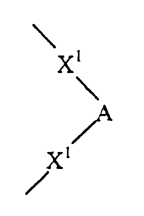 wherein each X¹ is independently selected from -O-, -S- or -N-R₁₀ and A is selected from ethylene, propylene, trimethylene, and such groups substituted with C₁-C₄ alkyl, C₁-C₄ alkoxy, aryl and cycloalkyl, 1,2-phenylene and 1,2-phenylene containing 1-3 substituents selected from C₃-C₄ alkyl, C₁-C₄ alkoxy or halogen.

For formulae II and III, n is an integer from 0-16; n₁ is an integer from 0-24, m is an integer from 0-16; m₁ is an integer from 0-24; provided that the sums of n+m and n₁+m₁ are 16 and 24, respectively.

R₁ and R₂ of formulae IV are independently selected from hydrogen, lower alkyl, lower alkoxy, halogen, aryloxy, lower alkylthio, arylthio, lower alkylsulfonyl; arylsulfonyl; lower alkylsulfonylamino, arylsulfonylamino, cycloalkylsulfonylamino, carboxy, unsubstituted and substituted carbamoyl and sulfamoyl, lower alkoxycarbonyl, hydroxy, lower alkanoyloxy,

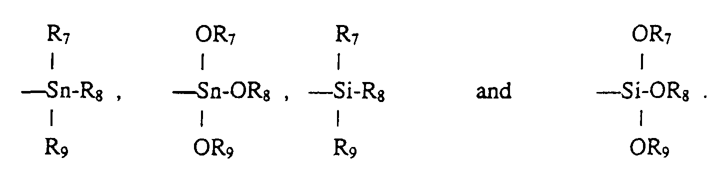

R₃ and R₄ of formula IV are independently selected from hydrogen, lower alkyl, alkenyl or aryl.

The NIRF compounds of formulae II, III and IV can be prepared by conventional methods.

In the above formulae, the phthalocyanine and 2,3-naphthalocyanine compounds of formula IIa and IIIa may also be covalently bound to a hydrogen, AlOH, Ca, CO, CrF, Cu, Fe, Ga, Mg, Mn, Pb, SnCl₂, Pt, Pd, SnCl₂, Sn, Si(OR)₂, TiO, Zn and others, as described in U.S. Serial No. 789,570, filed November 8, 1991, which is a grandparent application of U.S. Patent No. 5,461,136.

For the terms "alkyl", "lower alkyl", "lower alkoxy", "lower alkylthio", or "lower alkoxy carbonyl", "lower alkanoyl", "lower alkanoyloxy"; the "alkyl" portion represents 1-6 carbon atoms, which can be substituted by hydroxy, halogen, carboxy, cyano, alkoxy and aryl. "Cycloalkyl" represents 3-8 cyclic carbon atoms; "aryl" represents 6-18 aromatic carbon atoms; "heteroaryl" represents 2-17 cyclic carbon atoms with at least one oxygen, sulphur, nitrogen or a combination thereof, "alkenyl" and "alkylnyl" represents 3-8 carbon atoms with at least one double bond; "halogen" represents Br, Cl, F and I; "substituted carbamoyl" and "substituted sulfamoyl" represent CONR₁₂R₁₃ and -SO₂NR₁₂R₁₃, respectively, where R₁₂ and R₁₃ represent alkyl, alkenyl, alkynyl, cycloalkyl, aryl and heteroaryl, and "acyl" represents R₁₅C(O)-O-, when C₁₅ is alkyl.

Preferably, m is from 4-12 and m₁ is from 0-8 for formulae II and III. Other preferred compounds include the squaraine compounds of formula IV, wherein R₁ and R₂ are independently carboxy or lower alkoxy carbonyl; a 2,3-naphthalocyanine compound of formula III, wherein Y is hydrogen, n₁ is 24, and m₁ is 0; a 2,3-naphthalocyanine compound of formula III, wherein the naphthalocyanine moiety is bonded to SiCl₂, Si(OH)₂, or Si(OR₆)₂; and a phthalocyanine compound of formula II, wherein X is oxygen, R is aryl, Y is hydrogen, m is 4, and n is 12; and wherein the phthalocyanine moiety is bonded to AlCl, AlOH, AlOCOCF₃, AlOR₅, SiCl₂, Si(OH)₂, or Si(OR₆)₂. Other preferred compounds are described in Examples 1-41 of U.S. Patent No. 5,461,136, incorporated by reference herein.

Preferably, the NIRF compound is shielded from ambient air to prevent reaction with oxygen. The NIRF compound can be shielded by incorporating the compound in pigment particles, coating the layers formed with such compounds, or both.

The concentration of the NIRF compound within the flexographic inks of this invention can vary over wide limits. In general, an optical effect can be developed from most flexographic inks with a NIRF dye or pigment component present in an amount as low as 0.01 ppm based on the total weight of solids (dry components) and preferably in an amount within the range of 0.1 ppm to 1000 ppm, most preferably in the range of 1.0 ppm to 10 ppm, based on dry components of the flexographic ink used. It is generally desirable that the NIRF compound be present at the lowest practical level needed to produce an ink with a satisfactory fluorescence detection level to avoid interference from other colors and to minimize costs.

Apparatus used to detect the presence of NIRF compounds include any apparatus capable of detecting fluorescence, i.e., photons emitted by dyes and pigments at wavelengths in the range of about 670 nm to 2,500 nm. These photon detectors include photomultiplier tubes, solid state detectors, semiconductor based detectors and similar devices. Silicon photodiodes or germanium detectors are specific examples of suitable photon detectors. Filters may be used to restrict the wavelengths which impinge the detector.

Devices which irradiate the NIRF compounds with near infrared radiation include laser diodes, solid state lasers, dye lasers, incandescent lights sources and other light sources which emit radiation at a wavelength in the range of 670-2500 nm. Preferred light sources are those which have a maximum signal at the maximum of the absorbence of the NIRF compound. Filters may be used to restrict the wavelengths which irradiate the NIRF compounds.

The NIRF compounds are incorporated into security links in the form of NIRF dyes (solutions) or NIRF pigments (solid). The NIRF dyes comprise NIRF compounds in solution, preferably in aqueous solutions as discussed above. The NIRF pigment particles are solids and comprise a polymer or copolymer which is either admixed with NIRF compounds or the NIRF compounds are copolymerized with other active monomers, oligomers or polymers to form a copolymer.

The active monomers, oligomers or polymers typically have at least one reactive group selected from the formulae

-OCOR₁₄, -OCO₂R₁₄, OCONHR₁₄ OR -CO₂R₁₄,

wherein R₁₄ is selected from unsubstituted or substituted alkyl, cycloalkyl or aryl radicals, R₁₄ preferably is unsubstituted alkyl, *e.g.*, alkyl of up to about 8 carbons, or phenyl, and most preferably lower alkyl, *e.g.*, methyl and ethyl. The reactive group preferably is hydroxy, carboxy, carbomethoxy, carboethoxy or acetoxy. The monomers and oligomers contain 1 to about 8 reactive groups, preferably 2. The polymers may contain more. The NIRF compounds are added at such low levels that they do not significantly interfere with the polycondensation reaction of these active species.

The polymers admixed with NIRF pigments or copolymerized therewith are preferably polyesters, polycarbonates and polyurethanes and are used in an amount sufficient to render the NIRF pigments waterproof.

The diol components of the polyester may be comprised of, for example, ethylene glycol, 1,4-cyclohexanedimethanol, 1,2-propanediol, 1,3-propanediol, 2-methyl-, 1,3-propanediol, 1,6-hexanediol, 1,2-cyclohexanediol, 1,4-cyclohexanediol 1,10-decanediol, 1,2-cyclohexanedimethanol, 1,3-cyclohexanedimethanol, X,8-bis-(hydroxymethyl)-tricyclo-[5.2.1.0]-decane wherein X represents 3, 4, or 5; and diols containing one or more oxygen atoms in the chain, e.g., diethylene glycol, triethylene glycol, dipropylene glycol or tripropylene glycol and the like. In general, these diols contain 2 to 18, preferably 2 to 12 carbon atoms. Cycloaliphatic diols can be employed in their cis or trans configuration or as a mixture of both forms.

The acid components (aliphatic, alicyclic, or aromatic dicarboxylic acids) of the polyester may be comprised of, e.g., terephthalic acid, naphthalene-2,6-dicarboxylic acid, isophthalic acid, 1,4-cyclohexanedicarboxylic acid, 1,3-cyclohexane dicarboxylic acid, succinic acid, glutaric acid, adipic acid, sebacic acid, 1,12-dodecanedioic acid and the like. In place of the dicarboxylic acids themselves, it is possible and often preferable to use a functional acid derivative thereof such as the dimethyl, diethyl or dipropyl ester of the dicarboxylic acid. The anhydrides of the dicarboxylic acids can likewise be employed. The polyesters can be produced using typical polycondensation techniques well known in the art. Polycarbonates useful in the practice of the invention are disclosed in *Kirk-Othmer Encyclopedia of Chemical Technology*, third edition, Vol. 18, pp. 479-494.

A wide range of thermoplastic polymers suitable for blending with the above condensation polymers which contain the NIRF are known in the art and include polyesters, e.g., poly(ethylene terephthalate) and poly(butylene terephthalate); polyolefins, e.g., polypropylene, polyethylene, linear low density polyethylene, polybutylene and copolymers made from ethylene, propylene and/or butylene; polyamides, e.g., nylon 6 and nylon 66; polyvinyl chloride, polyvinylidene chloride; polycarbonates; cellulose esters, e.g., cellulose acetate, propionate, butyrate or mixed esters; polyacrylates, e.g., poly(methyl methacrylate); polyimides; polyester-amides; polystyrene; and ABS (acrylonitrile-butadiene-styrene)type polymers.

The NIRF flexographic ink formulations used can have a solids content which ranges widely such as from 20 to 80 wt.% which includes the NIRF compound and carrier polymer or copolymer components. A solids content of from 40-60 wt.% is preferred for conventional flexographic printers such as those provided by Wolverine and Mark Andy. Pigments concentrates are often prepared and diluted with polymer resin to achieve preferred levels of NIRF compounds.

A NIRF pigment concentrate may be formed which comprises a NIRF compound of formula II, III or IV as discussed above, polymerized in a partially crystalline polyester at a level of from 0.1 to 30.0 wt.%, preferably 0.1 to about 10.0 wt.%. These copolymers preferably have at least two reactive groups. This concentrate can be used as a powder or pellet admixed with a desired polyester or other thermoplastic polymer. The concentrate may be dry blended or solution blended with additional resin. Suitable polyesters are linear thermoplastic crystalline or amorphous polymers.

The NIRF pigments may contain additional additive or binder components to enhance or add to their performance. For example, a U.V. stabilizer may be added to help protect the NIRF compound from degradation.

In preparing the flexographic ink, a polymer resin binder, a NIRF pigment or dye, a colorant and solvent are combined. The colorant, solvent and binder can be used at conventional levels in that the amount of NIRF compounds are so low as to not disturb the function of these conventional components. Optionally, pH stabilizers, surfactants, defoamers and additional solvents can be added.

Any conventional solvent for flexographic inks can be employed. The flexographic inks preferably comprise an aqueous based solvent comprising at least 20 wt.% water. The aqueous based solvent can comprise water with or without a water soluble or emulsifiable organic solvent. Those commonly employed are lower aliphatic alcohols, including propanol, isopropanol, ethanol, butanol, lower aliphatic esters, in particular, ethyl acetate and lower aliphatic ketones, in particular, methylethyl ketone. Additional solvent systems for flexographic inks are described in *Kirk-Othmer Encyclopedia of Technology*, 3^{rd} Edition, Volume 13, John-Wiley & Sons (New York: 1981). The aqueous based solvent may contain a dispersing agent to help solubilize the NIRF pigment or dye. It is essential that any resin binder used with these solvents be soluble, dispersible or emulsifiable in water to provide a water-based ink. The resin binders and the amount thereof can vary widely. For example, the amount of resin binder used can vary from 5 to 70 wt.% based on the total weight of the flexographic ink.

Conventional binders for flexographic inks can be employed in the inks of this invention. These are commonly selected from rosin esters, and other synthetic film-forming polymers such as polyamides, alkyd resins and proteins (kasien, gels and select protein). The choice of binder will depend on the substrate employed. Water soluble, dispersible or emulsifiable resins suitable as binders include thermoplastic resins such as acrylic resins, (methacrylic resin, methacrylic copolymers, modified methacrylic copolymers), polyvinyl chloride, polyvinyl acetate, vinyl chloride-vinyl acetate copolymers, polyethylene, polypropylene, polyacetal, ethylene-vinyl acetate copolymer, ethylenealkyl(meth)acrylate copolymer, ethylene-ethylacetate copolymer, polystyrene, styrene copolymers, polyamide, ethylcellulose, epoxy resin, polyketone resin, polyurethane resin, polyvinylbutryl, styrenebutadiene rubber, nitrile rubber, acrylic rubber, ethylene-propylene rubber, ethylene alkyl(meth)acrylate copolymer, styrene-alkyl(meth)acrylate copolymer, acrylic acid-ethylene-vinylacetate terpolymer, saturated polyesters and sucrose benzoate. The binders may comprise a blend of resins to provide a specific property profile. The amount of thermoplastic resin can range from 15-35 wt.%, and preferably comprises at least 25 wt.% of the coating formulation, based on the total dry ingredients. To obtain emulsions of polymers which are insoluble or partially soluble in water at these levels, the resin is typically ground to submicron size.

The flexographic inks may comprise a water emulsifiable or dispersible wax and/or a water soluble, emulsifiable or dispersible thermoplastic resin binder component. The waxes can be natural waxes, including Carnauba wax, candelilla wax, beeswax and rice bran wax, petroleum waxes such as paraffin wax, synthetic hydro-carbon waxes such as low molecular weight polyethylene wax, polypropylene wax, polytetrafluoroethylene wax and Fisher-Tropsch wax, higher fatty acids such as myristic acid, palmitic acid, stearic acid and behenic acid; higher aliphatic alcohols such as steryl alcohol and esters such as sucrose fatty acid esters. Mixtures of waxes can also be used. To aid in the dispersion of the wax within an aqueous medium, micronized grades of wax are preferred.

Suitable additives for the flexographic ink include defoamers, UV absorbents, thickening agents, softening or coalescing agents. Suitable defoaming agents are those of the silicone fluids and silicone emulsions. Softening or coalescing agents comprise glycols and their derivatives. Thickening agents preferably comprise aqueous dispersions of highly polymeric acrylic polymers and cellulose derivatives. These additives also must not interfere with the NIRF fluorescence.

The coloring agents can be organic or inorganic dyes or pigments and are preferably organic dyes. Suitable colorants fall within the full spectrum of colors. Conventional colorants for flexographic inks are suitable, provided that they do not absorb near infrared radiation at levels which interfere with detection of the NIRF compound within the ink. Pigments other than carbon blacks can be used at high levels where they do not interfere with the detection of NIRF compounds and are typically white pigments. The colorants employed can include a combination of dyes and pigments, but they contain less than 3 wt.% carbon black. Carbon black absorbs near infrared radiation such that detection of NIRF compounds within a carbon black based ink is unreliable. Preferably, the colorant is free of carbon black, and, where a black image is desired, it is necessary to combine organic dyes to achieve such coloration. Colorants which provide cyan, magenta, yellow and black coloration can be used in combination to generate essentially any color.

The water-soluble dyes can include basic dyes, acid dyes or salts thereof. Suitable basic dyes for use in the flexographic inks of the invention, include basic yellow: 2, 13, 28, 37 and 65; basic orange: 2, 2 and 5; basic red 1, 2, 14 and 28: basic violet 1, 2, 3 and 10; basic blue: 1, 3, 5, 7, 8, 9, 11, 26, 55 and 81; basic green: 1 and 4; and basic brown: 1. Suitable acid dyes for use in flexographic inks according to the invention include acid yellow: 3, 5, 17, 23, 36, 34, 73, 121, 157, 194, 204 and 236; acid orange: 3, 7, 10, 142 and 144; acid red: 18, 52, 87, 88, 143, 221, 289, 357 and 359; acid green: 1, 16, 26 and 104; acid blue: 1, 7, 9, 15, 20, 22, 93, 129, 193, 254 and 285; acid brown: 101, 103, 165, 266, 268, 355, 357, 365 and 384; and acid black: 47, 52 and 94. These dyes are all classified in the color index, *Color Index*, 3^{rd} Edition, The American Color Association of Textile Chemists and Colorists, P.O. Box 12215, Research Triangle Park, North Carolina 27709, and are well known to those skilled in the art.

To provide the flexographic inks, the components can be combined as dispersions at about 30 wt.% solids in a ball mill or similar conventional grinding equipment and agitated and ground.

The flexographic printing system of this invention is capable of printing any color by a flexographic printing process while simultaneously providing NIRF security. The flexographic system includes cyan, magenta, yellow and black color (without carbon black) flexographic inks, at least one of which contains a NIRF compound in an amount sufficient to be sensed by a photon detector when illuminated with near infrared radiation. Such printing systems optionally include a transparent flexographic printing ink that contains a NIRF compound. While the use of such an ink adds an additional step in forming a printed medium, marking and printing the document is still achieved by flexographic printing and can easily be incorporated in multi-printer flexographic printing process which provides multi-color printed images.

Printed media which contain a NIRF security can be prepared by a conventional flexographic printing process and press, wherein a flexographic ink with a NIRF dye or pigment, as described above, is applied to a base layer. Once the flexographic ink is applied, it is dried at temperatures preferably less than 65°C, most preferably at ambient temperature.

The method of the present invention allows for use of flexographic inks with colorants which absorb in the near-infrared region of 650 nm to 2,500 nm. Such methods comprise applying a colored flexographic ink with such a colorant at 40-75% screen volume in a screen format. This provides spaces between the deposited ink such that the colorant therein cannot absorb all near-infrared radiation that impinges the surface. The colored flexographic ink may or may not have NIRF compounds therein. Any NIRF compounds in these inks will be ineffective if the level of absorption of near-infrared radiation by the colorant is high. In the method of this invention, a flexographic ink is also applied to the print medium which contains NIRF compounds. This NIRF flexographic ink can be transparent or colored, provided that the colorant therein does not contain more than 3 wt.% carbon black and does not absorb near-infrared radiation at a wavelength in the range of 650 to 2,500 nm. This NIRF flexographic ink can be applied over the entire surface of the print medium, particularly where transparent, or it can be applied at localized areas when colored. The NIRF flexographic ink layer is preferably applied at high density of over 75% to ensure coverage between the low density image. The NIRF flexographic ink can be printed over the colored flexographic ink or vice-versa. The NIRF flexographic ink can also be applied to the opposite side of the colored flexographic ink where transparent.

The method of this invention provides great flexibility in employing colorants which absorb near-infrared radiation and provides particular advantage where a mixture of colorants such as magenta and yellow are used in that it allows a wider variety of conventional flexographic inks to be employed in each printing step.

The flexographic inks and flexographic printing system can be employed in conventional flexographic equipment such as that described in U.S. Patent No. 5,558,020 and those provided by Wolverine and Mark Andy (Flexopress).

### Example 1

### Preparation of Concentrate

A NIRF pigment concentrate is prepared by dispersing Eastek 1100 polyester, available from Eastman Chemical, with 2000 ppm NIRF 670 in its backbone in deionized water at a concentration of 30 wt.% solids. The concentrate comprises 600 ppm NIRF 670 dye compound.

Flexographic inks are prepared using the 600 ppm concentrate of NIRF 670 dye compound and the flexo-overprint varnish - X24561-115C, 75/25 of Eastek 1100/1300, as a diluent. Flexographic inks with 30, 60 and 120 ppm concentrations of NIRF 670 are prepared with 10-15 wt.% of magenta dye and no carbon black pigment. The viscosity of the flexographic inks is about 19 seconds of Zahn cup No. 2.

### Flexographic Printing

Samples of thermal paper, Kanzaki F-380, having a thermal sensitive coating thereon, are printed with flexographic ink under the following eight different conditions:
1. print 60 ppm ink on the back side of thermal paper without using heat drying;
2. print 60 ppm ink on the front side of thermal paper without using heat drying;
3. print 60 ppm ink on the back side of thermal paper with heat drying;
4. print 60 ppm ink on the front side of thermal paper with heat drying;
5. print 30 ppm ink on the back side of thermal paper with heat drying;
6. print 120 ppm ink on the back side of thermal paper with heat drying;
7. print 30 ppm ink on the front side of thermal paper with heat drying;
8. print 120 ppm ink on the front side of thermal paper with heat drying.

The flexographic inks are applied in the shape of a 12.7 x 12.7 mm (½" by ½") square using a Mark Andy 830 Flexo press. A rubber metering roll is used to supply and meter the ink into an Anilox roll from which the ink is transferred to the substrate through a plate. The Anilox roll comprises 200 pyramids with a volume of 7 BCM. The line speed is 76.2 m/min (250 ft/min). Drying without heat is accomplished by exposure to air without blowing air. Drying with heat is accomplished using a Quartz lamp as a heat source with blowing air at a temperature of about 43°C (110°F) in the dryer zone.

While drying, the prints are tested for detection of the NIRF pigments using a Meter Model DM-8 detector by V.C. Engineering Inc. of Cincinnati, Ohio. Prints of tests 1 and 2 can be detected easily on the press during the run using the detector. However, the prints of test 1 are not detectable when one sheet of printed sample is placed on a light-gray table. The prints of test 2 are still detectable when placed on a light-gray table. This indicates the ink forms a better film on the front side of the paper having a higher smoothness (20 Sheffield smoothness vs. 70 for back side).

Prints of tests 3 and 4 are both detectable during the run and when laid on a light-gray table. Prints of tests 6 and 8 are also detectable. The heat drying process produces papers with stronger signals, as observed using a Sony CCD camera. However, the drying seems to reduce the amount of NIRF compound penetrating the pores of paper.

Prints 5 and 7 are scannable on the light-gray table, but are not detectable on the press run, indicating 30 ppm concentration of NIRF 670 compound is not preferred for production. The detectable amounts thereof could depend on line speed of the production line.

### Example 2

Flexographic inks of NIRF T4 780 at concentrations of 300 and 600 ppm are prepared using T4 780 NIRF concentrates of 3000 ppm and 6000 ppm, respectively. The NIRF T4 pigments are dispersed into acrylic overprint varnish and the solids adjusted to 44% in water. The viscosity of both flexographic inks is 23 seconds in a Zahn Cup #2 (X24429-187 and X24429-188B).

### Printing on Thermal Paper

The two flexographic inks are printed on Kanzaki F-380 thermal paper and No. 15 bond paper, respectively, using a Mark Andy 830 flexo press, as discussed above. A rubber metering roll is used to supply and meter ink to an Anilox roll, from which the ink is transferred to a rubber plate. The Anilox rolls comprise ceramic 300 lines (10 BCM) and 400 lines (7 BCM) respectively. The line speed is 30.5 m (100 feet) per minute and drying is accomplished employing a quartz lamp as a heat source. The NIRF compound is detected both during and after the press run.

### Example 3

The flexographic inks described in Examples 1 and 2 (NIRF 670 and NIRF T4 780) are coated on various types of paper, both front and back with the Mark Andy Flexo press discussed above with an Anilox roller 300, 10 BCM rollers. The coating formulations are printed on the following papers at a press speed of 61m (200 feet) per minute, as 51mm (2") wide strips traveling with the web at a length of 356mm (14")
1. 3-S tablet
2. T-1012A and
3. Enviro 100,
The NIRF compounds on each paper are sensed during printing.

### Example 4

Two sets of five colors bars 19mm (¾") tall and 33cm (13") wide are applied to the various papers of Example 3, as set forth below.
- Set #1: 1. Pantone Green
2. Pantone Black
3. Pantone Cyan
4. Pantone Violet
5. PMS 348
- Set#2: 1. Reflex Blue
2. PMS 185
3. PMS 347
4. PMS 469
5. PMS 165.
Flexographic ink described in Examples 1 and 2 are applied as shown in Table A. NIRF compound is detected in each.

**TABLE A**

| NIRF Position | Paper | Color Group |
|---|---|---|
| 1. Front | 3-S | 1 |
| 2. Back | 3-S | 1 |
| 3. Front | T-1012 | 1 |
| 4. Back | T-1012 | 1 |
| 5. Back | E-100 | 1 |
| 6. Front | E-100 | 1 |
| 7. Back | 3-S | 2 |
| 8. Front | 3-S | 2 |
| 9. Back | T-1012 | 2 |
| 10. Back | T-1012 | 2 |
| 11. Front | E-100 | 2 |
| 12. Back | E-100 | 2 |

The preceding examples can be repeated with similar success by substituting the generically or specifically described reactants and/or operating conditions of this invention for those used in the preceding examples.

## Claims

1. A flexographic printing ink which provides colored print and a security feature and comprises a solvent, colorant, resinous binder, characterised in that it also comprises a near infrared fluorescent (NIRF) compound which fluoresces photons at wavelengths in the range of 650 nm to 2,500 nm, in that the amount of NIRF compound is sufficient to form flexographic print which can be sensed by a photon detector operating in the near infrared region of 650 nm to 2,500 nm and the amount of colorant is sufficient to provide colored print, detectable by the unaided human eye, and in that the colorant is selected from dyes and pigments which comprise less than 3 wt.% carbon black,

2. A flexographic printing ink as claims in claim 1, characterised in that the colorant is selected from cyan dyes, cyan pigments, magenta dyes, magenta pigments, black dyes, yellow dyes and yellow pigments.

3. A flexographic printing ink as claimed in claim 1 or claim 2 characterised in that the NIRF compound is shielded from ambient air within a solid pigment particle comprised of polyester, polyurethane or polycarbonate resin or a copolymer thereof.

4. A flexographic printing ink as claimed in claim 3, characterised in that the solid pigment particle comprises a NIRF compound:
a) admixed within a polymer, which is not water soluble, or
b) copolymerized with monomers, oligomers or polymers to form a water insoluble copolymer.

5. A flexographic printing ink as claimed in any preceding claim, characterised in that the NIRF compound is selected from phthalocyanines, naphthalocyanines and squaraines that correspond to Formulae II, III and IV: 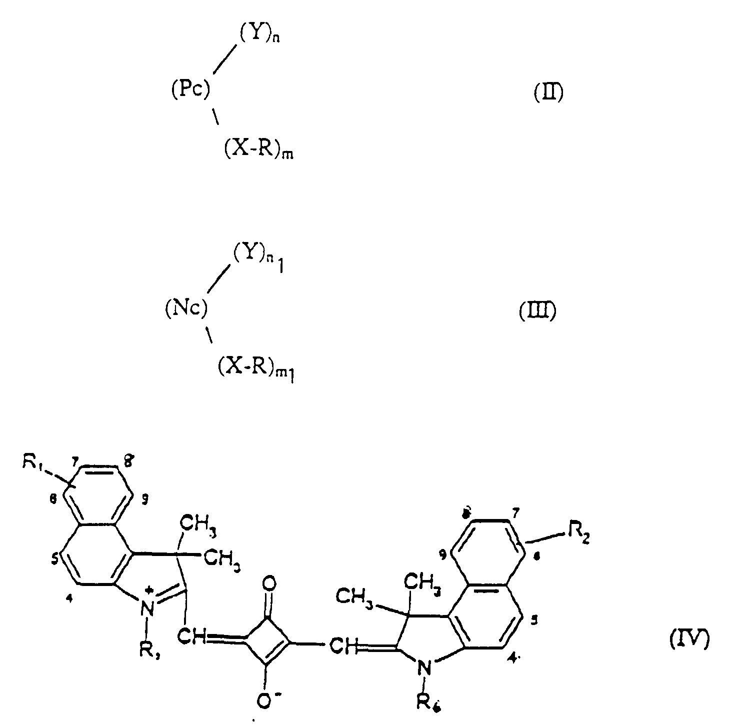
wherein Pc and Nc represent the phthalocyanine and 2,3-naphthalocyanine moieties of Formulae IIa and IIIa, 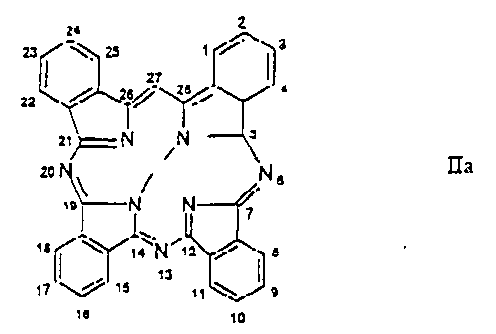 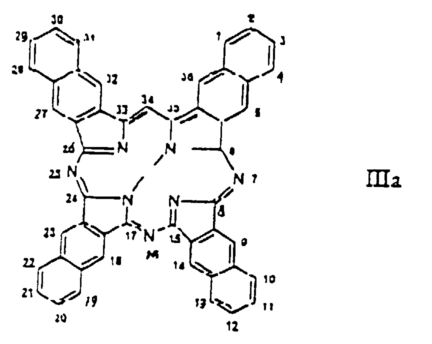 respectively, covalently bonded to aluminium and silicon containing groups selected from AlCl, AlBr, AlF, AlOR₅, AlSR₅, SiCl₂, SiF₂, Si(OR₆)₂ and Si(SR₆)₂
wherein R₅ and R₆ are selected from hydrogen, alkyl, aryl heteroaryl, lower alkanoyl, arylcarbonyl, arylaminocarbonyl, trifluoroacetyl, groups of the formulae 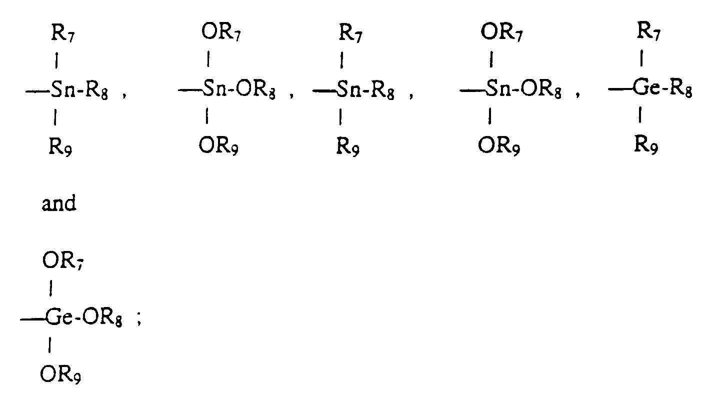
R₇ R₈ and R₉ are independently selected from alkyl, phenyl or phenyl substituted with lower alkyl, lower alkoxy and halogen;
X is selected from oxygen, sulfur, selenium, tellurium and a group of the formula N-R₁₀, wherein R₁₀ is hydrogen, cycloalkyl, alkyl, acyl, alkylsulfonyl, or aryl, or R₁₀ and R taken together form an aliphatic or aromatic ring with the nitrogen atom to which they are attached;
Y is selected from alkyl, aryl, heteroaryl, halogen and hydrogen;
R is selected from the group consisting of hydrogen, unsubstituted or substituted alkyl, alkenyl, alkynyl,
C₃-C₈ cycloalkyl, aryl, heteroaryl, alkylene 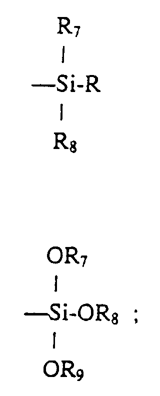 and
or -(X-R)ₘ is one of the groups selected from alkylsulfonylamino, arylsulfonylamino, -X(C₂H₄O)2_{z}R, wherein R is as defined above; Z in an integer of from 1-4; 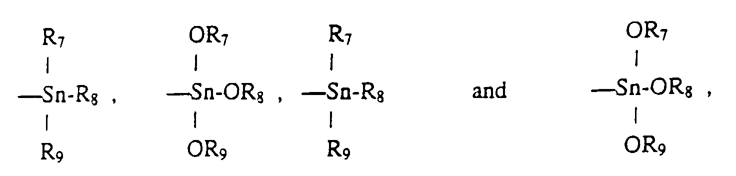 or two -(X-R)ₘ groups are taken together to form divalent substitutes of the formula 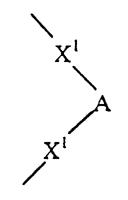 wherein each X¹ is independently selected from -O-, -S- or -N-R₁₀ and A is selected from ethylene, propylene, trimethylene and such groups substituted with C₁-C₄ alkyl, C₁-C₄ alkoxy, aryl and cycloalkyl, 1,2-phenylene and 1,2-phenylene containing 1-3 substituents selected from C₃-C₄ alkyl, C₁-C₄ alkoxy or halogen;
n is an integer from 0-16; n₁ is an integer from 0-24; m is an integer from 0-16; and m₁ is an integer from 0-24; provided that the sums of n+m and n₁+m₁ are 16 and 24. respectively,
R₁ and R₂ are independently selected from hydrogen, lower alkyl, lower alkoxy, halogen, aryloxy, lower alkylthio, arylthio, lower alkylsulfonyl; aryl sulfonyl, lower alkylsulfonylamino, arylsulfonylamino, cycloalkylsulfonylamino, carboxy, unsubstituted and substituted carbamoyl and sulfamoyl, lower alkoxycarbonyl, hydroxy, lower alkanoyloxy, 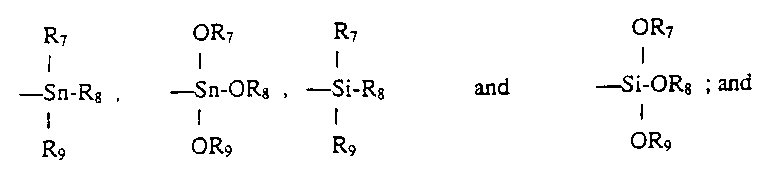
R₃ and R₄ are independently selected from hydrogen, lower alkyl, alkenyl and aryl.

6. A flexographic printing ink as claimed in any preceding claim characterised in that the amount of NIRF compound ranges from 1 ppm to 1000 ppm, based on total dry components of the flexographic printing ink.

7. A flexographic printing ink as claimed in any preceding claim characterised in that the NIRF compound fluoresces at 780 nm to 2500 nm.

8. A flexographic printing system for printing security documents in any color which comprises:
a) a cyan colored flexographic printing ink comprising solvent, cyan colorant and resin binder,
b) a magenta colored flexographic printing ink comprising solvent, magenta colorant and resin binder,
c) a yellow colored flexographic printing ink comprising solvent, yellow colorant and resin binder, and
d) a black colored flexographic printing ink comprising solvent, black dye and resin binder,
characterised in that one or more of the flexographic inks is as claimed in any preceding claim.

9. A flexographic printing system for printing security documents in any color which comprises:
a) a cyan colored flexographic printing ink comprising solvent, cyan colorant and resin binder,
b) a magenta colored flexographic printing ink comprising solvent, magenta colorant and resin binder,
c) a yellow colored flexographic printing ink comprising solvent, yellow colorant and resin binder, and
d) a black colored flexographic printing ink comprising solvent, black dye and resin binder, characterised in that it additionally comprises:
e) a transparent flexographic printing ink comprising solvent, resin binder and a near infrared fluorescent (NIRF) compound which fluoresces photons at wavelengths in the range of 650 nm to 2500 nm in an amount sufficient to form flexographic printed coatings which can be sensed by a photon detector at wavelengths in the range of 650 nm to 2500 nm
and wherein the colorants and black dye are selected from dyes and pigments which comprise less than 3 wt.% carbon black.

10. A flexographic printing system as claimed in claim 8 or claim 9, characterised in that all of the flexographic inks contain NIRF compound.

11. A flexographic printing method for preparing printed images with a near infrared fluorescent (NIRF) security feature, characterised by the steps of:
a) printing a colored flexographic ink in screen format at from 40% to 75% screen value on a base sheet, said flexographic ink comprising a colorant selected from cyan, magenta, yellow and black pigments and dyes; and
b) applying a NIRF flexographic ink which contains 1 to 1000 ppm based on the weight of dry compounds of a near infrared fluorescent pigment which fluoresces photons at wavelengths in the range of 650 nm to 2500 nm on said base sheet at 75% coverage and above.

12. A method as claimed in claim 11, characterised in that the NIRF flexographic ink also contains a colorant which comprises less than 3 wt.% carbon black and does not absorb infrared radiation at levels which interfere with sensing the NIRF compound therein by a photon detector.

13. A method as claimed in claim 11 or claim 12, characterised in that the NIRF flexographic ink is printed over the colored flexographic ink.

14. A method as claimed in claim 11 or claim 12, characterised in that the colored flexographic ink is applied over the NIRF flexographic ink.

15. A method as claimed in claim 11 or claim 12 characterised in that the NIRF flexographic ink and colored flexographic ink are printed on opposite sides of the base sheet.
